# NEW EUROPEAN PATENT SPECIFICATION

(11) **EP 0 536 143 B2**
(45) Date of publication and mention of the opposition decision: **03.12.1997**
(45) Mention of the grant of the patent: 21.09.1994
(21) Application number: 91908433.5
(22) Date of filing: 11.03.1991
(51) Int. Cl.: B65D 17/40, B65D 35/44, B29C 45/00

(54) **DISPOSABLE CONTAINER FOR SINGLE DOSAGE APPLICATIONS**
EINWEGBEHÄLTER FÜR EINZELPORTIONEN
RECIPIENT JETABLE A DOSE UNIQUE

(30) Priority: 02.07.1990 SE 9002310
(43) Date of publication of application: 14.04.1993
(73) Proprietor: NORDEN PAC DEVELOPMENT AB, S-391 28 Kalmar (SE)
(72) Inventor: LINNER, Hans, S-392 43 Kalmar (SE)
(74) Representative: Mossmark, Anders
(86) International application number: SE9100181
(87) International publication number: WO9200224

(56) References cited:
- EP-A- 0 076 418
- DE-A- 2 500 640
- FR-A- 1 181 592
- FR-A- 1 347 236
- FR-A- 2 639 026
- US-A- 4 228 835
- US-A- 4 243 620
- US-A- 4 733 801

## Description

The present invention relates to a thermoplastic, disposable container according to the preamble of claim 1 and a method of its manufacture according to the preamble of claim 5. The invention also relates to an end closure for a container according to the preamble of claim 7.

There is an increasing demand for containers which can hold sufficient contents for a single application. A typical use for such containers is in hotels where, for example hair shampoo and bath-water additives are provided for the guest. In the past these toiletries have been provided in a tear-open laminated plastic/foil sachet or in a small screw top bottle which can have a tamper-evident seal.

These prior art containers share the same disadvantage, i.e. a two-handed operation is required to gain access to contents.

EP-A-0 076 418 describes a method for manufacturing an injection-moulded container having a break-off cap to facilitate the opening of the container. The cap is formed as an extention of the neck region of the container and, during the injection-moulding, a weakened region is formed in the exterior surface of the container. Whilst such a container is easier to open than the previously mentioned containers, the container according to EP-A-0 076 418 displays several disadvantages, most notably that a complicated mould arrangement is needed due to the exterior weakened region. Additionally, said region of weakening is not particularly attractive, whilst the non-uniform thickness displayed by the neck- and cap portions can lead to irregular cooling of the container after moulding.

DE-A-2 500 640 describes a container intended for single dosage application of a medical product. The container comprises a body portion and a closure means with an external weakened region therebetween. The container can also be provided with an applicator and a cover to protect the applicator.

It is an object of the present invention to provide a disposable container which can be opened one-handedly and which is inexpensive to produce.

This need is satisfied by a container according to claim 1 which can be manufactured according to the method of claim 5. An end closure which can be applied to any suitable container body portion to satisfy the said need is specified in claim 7.

According to the present invention, the weakened region is in the form of a region of material of reduced thickness provided on the inside of the container, thereby allowing the container to be axially withdrawn from its mould after the injection-moulding has been carried out. Furthermore, since the region of thinner material is inside the container, no detremental weakening lines mar the external appearance of the container.

In use, such containers can be picked up with one hand and the extension thereon broken off through pressure exerted by the thumb, or a finger, of the same hand.

Preferred embodiments of the present invention are detailed in the dependent claims.

Further advantages of, and applications for, the container of the present invention will become evident from the following description with reference to the drawings in which
- Figs. 1 and 2: show a front, respectively side, elevation of a container according to the present invention;
- Fig. 3: shows in cross-section an end closure with an extension moulded integrally therewith according to a second aspect of the present invention;
- Fig. 4.: shows a further embodiment of the invention in which the remote end of the container is weldably pinched together;
- Fig. 5: shows a profiled end wall and extension combination, and
- Fig. 6: shows a partial section through the end wall and extension of the container according to Fig. 5.

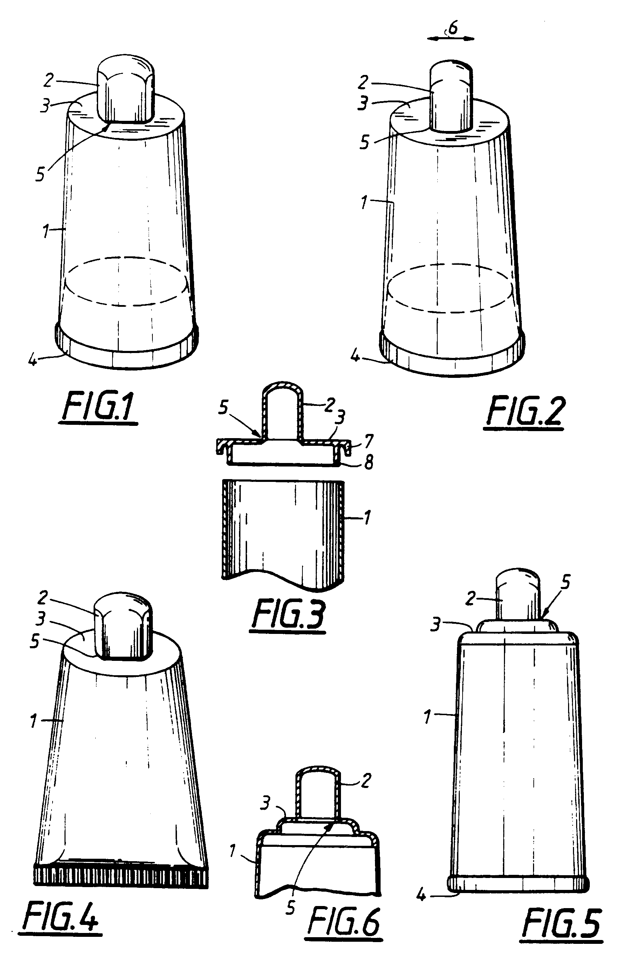

With reference to Figures 1 and 2, reference numeral 1 denotes the body portion of a plastic container having an integral, hollow extension 2 on an end wall 3. The other end of the container is closed by an end wall 4. In the example shown, the container has a substantially cylindrical form, though the cross-section of the container could be of any shape, for example poly-sided.

The extension 2 is moulded integrally with an end wall as shown,. The extension intersects the wall upon which it is moulded at substantially right angles.

A typical container may have a diameter of 30 mm a body portion length of 60 mm, an extension length of 15 mm and a wall thickness of less than 1 mm.

To produce such a container, an outer die adapted to the desired form of the exterior of the container and an inner die corresponding to the inner form of the container are used. A gap is maintained between the outer die and inner die which is substantially uniform except for at a region corresponding to the intersection of the extension 2 with the end wall 3. At this region, a line of thinner material is formed by means of a shoulder or chamfer on the inner die. This line of thinner material corresponds to the line of breakage joining the extension 2 to the end wall 3 and may extend around a major portion of the circumferential base section of the extension.

The container may then be filled with the desired contents and the end wall 4 remote from the extension 2 then fixed to the container by any known means, for example hot welding.

In use, when sufficient pressure is exerted in, for example, the direction of arrow 6 (Fig. 2), the material at the intersection 5 will shear, thereby revealing an opening in the container which corresponds in shape to the circumferential base section of the extension. The shape of the circumferential base section need not be rectangular as shown in Figures 1 and 2, but may be any shape, for example round or poly-sided.

In Figures 1 and 2 the extension and its cooperating end wall, together with the cylindrical body portion, are moulded integrally, i.e. in one piece. However, as shown in Fig. 3, in a further aspect of the present invention the extension may be moulded integrally with an end or body portion and then fixed to the remainder of the container in any suitable manner, for example by hot welding.

Thus, the end closure in Fig. 3 comprises an end wall 3 having on one of its major surfaces a hollow extension 2 extending therefrom. In the region of the intersection 5 between the end wall 3 and the hollow extension 2 a line of thinner material is formed as described above. To facilitate the fixing of the end closure to a container body portion 1, the end closure is provided with a circumferential flange 7 which extends substantially perpendicularly from the end wall 3 in a direction away from the extension 2. A second circumferential flange 8 extending in the same direction as the first flange is located radially within the first flange 7. The gap between the two flanges 7,8 substantially corresponds to the wall thickness of the container to which the end closure is to be affixed.

In Fig. 4 an end closure is shown in which the end wall is formed by pressing together the body portion or walls immediately adjacent the filling opening and then welding the wall or walls to form a seam.

From Fig. 5 it can be seen that the end wall need not be flat, but may be profiled to give a more aesthetic shape, whilst still providing a line of weakness at the intersection 5 between the end wall and the extension. This line of weakness is most clearly shown in Fig. 6. and, in this case, is formed by a substantially flat-faced shoulder on the (not shown) inner die of the injection-moulding apparatus.

Naturally, the invention is not limited to that described above, but may be varied within the scope of the appended claims. For example, the line of weakness need not extend around the entire circumferential base section of the hollow extension, but instead a non-weakened region may be left which acts as a plastic hinge for the hollow extension after an opening force has been applied thereto.

## Claims

1. A thermoplastic, disposable container having an inner surface and an outer surface, the container being intended for single dosage applications and having a body portion (1) and two end walls (3, 4) with a break-off closure means covering an outlet in said container, said closure means comprising a hollow extension (2) of the container, which extension (2) is arranged to be broken away from the container along a breakage line formed by a region of thinner material substantially at an intersection (5) between the base of the extension (2) and a wall of the container, wherein at said intersection (5) the inner surface of the container approaches the outer surface to provide said region of thinner material and thereby render the breakage line externally invisible, characterized in that said outlet is arranged in an end wall (3) of said container, and in that said break-off closure means covering said outlet is arranged with respect to the container such that said container can be gripped in one hand and opened through pressure exerted by a digit of the same hand.

2. Container according to claim 1, **characterized** in that the body portion (1) and said combined extension/end wall (2, 3) are integrally moulded.

3. Container according to claim 1, **characterized** in that the end wall (4) remote from the combined extension/end wall (2, 3) is fitted to the container after the container has been filled through the opening which this end wall (4) is to seal.

4. Container according to claim 1, **characterized** in that the body portion (1) of the container is a cylinder and that the end walls (3, 4) extend perpendicularly from the inner wall of the cylinder.

5. Method of injection-moulding a container according to any of the previous claims, using an outer die adapted to the desired form of the exterior of the container and an inner die corresponding to the inner form of the container, **characterized** in that a gap is maintained between the outer die and inner die which is substantially uniform except for at a region corresponding to the intersection of the extension (2) with the end wall (3) whereat a shoulder or chamfer on the inner die results in, after the injection-moulding, a line of thinner material corresponding to the line of breakage joining the extension (2) to the end wall (3).

6. Method of injection-moulding a container according to claim 5, **characterized** in that the end wall remote from the combined extension/end wall (2, 3) is formed by pressing together the body portion (1) immediately adjacent the filling opening and welding the wall (1) or walls to form a seam.

7. An end closure suitable for closing an end of a container body portion, which end closure comprises an end wall (3) with first and second major surfaces, **characterized** in that a hollow extension (2) of said end wall (3) extends from an intersection (5) between the end wall (3) and the hollow extension (2) substantially perpendicularly away from said first major surface, and in that a region of thinner material is provided at the intersection (5) at which the second major surface approaches the first major surface, thereby creating a breakage line at said intersection, and in that means (7,8) are provided on the second major surface of the end wall to facilitate attachment of said end closure to a container body portion.

## Patentansprüche

1. Thermoplastischer Einwegbehälter mit einer Innenfläche und einer Außenfläche, wobei der Behälter für Einzeldosierungsanwendungen bestimmt ist und einen Körperabschnitt (1) und zwei Endwandungen (3, 4) mit einer Abbrech-Verschlußeinrichtung aufweist, welche eine Auslaßöffnung in dem Behälter abdeckt, wobei die Verschlußeinrichtung eine hohle Anformung (2) des Behälters aufweist, welche von dem Behälter entlang einer Bruchlinie wegbrechbar ist, welche durch einen Bereich aus dünnerem Material im wesentlichen an einem Verbindungsabschnitt (5) zwischen der Basis der Anformung (2) und einer Wandung des Behälter gebildet ist, wobei die Innenfläche des Behälters an dem Verbindungsabschnitt (5) sich der Außenfläche zur Bildung des Bereichs aus dünnerem Material annähert und dadurch die Bruchlinie äußerlich unsichtbar macht, dadurch **gekennzeichnet**, daß der Auslaß in einer Endwandung (3) des Behälters angeordnet ist und daß die Abbrech-Verschlußeinrichtung, welche den Auslaß abdeckt, derart bezüglich des Behälters angeordnet ist, daß der Behälter in einer Hand greifbar und durch Druck öffnungsfähig ist, welcher durch einen Finger der selben Hand ausgeübt wird.

2. Behälter nach Anspruch 1, dadurch **gekennzeichnet**, daß der Körperabschnitt (1) und die verbundene Anformung/Endwandung (2, 3) einstückig geformt sind.

3. Behälter nach Anspruch 1, dadurch **gekennzeichnet**, daß die von der verbundenen Anformung/Endwandung (2, 3) entfernte Endwandung (4) an den Behälter angebracht worden ist, nach-dem der Behälter durch die Öffnung gefüllt wurde, welche diese Endwandung (4) verschließen soll.

4. Behälter nach Anspruch 1, dadurch **gekennzeichnet**, daß der Körperabschnitt (1) des Behälters ein Zylinder ist, und daß die Endwandungen (3, 4) sich senkrecht von der inneren Wandung des Zylinders erstrecken.

5. Verfahren zum Spritzgießen eines Behälters nach einem der vorhergehenden Ansprüche, welches einen an die gewünschte Form des Behälteräußeren angepaßten Außenformstempel und einen der inneren Form des Behälters entsprechenden Innenformstempel verwendet, dadurch **gekennzeichnet**, daß ein Zwischenraum zwischen dem Außenformstempel und dem Innenformstempel belassen wird, welcher im wesentlichen, außer bei einem der Verbindungsabschnitte der Anformung (2) mit der Endwandung (3) entsprechenden Bereich, gleichförmig ist, wobei eine Schulter oder abgeschrägte Kante auf dem Innenformstempel zu einer Linie dünneren Materials, entsprechend der die Anformung (2) und die Endwandung (4) verbindenden Bruchlinie, nach dem Spritzgießen führt.

6. Verfahren zum Spritzgießen eines Behälters nach Anspruch 5, dadurch **gekennzeichnet**, daß die von der verbundenen Anformung/Endwandung (2, 3) entfernte Endwandung durch Zusammenpressen des Körperabschnittes (1), welcher unmittelbar neben der Füllöffnung liegt, und durch Verschweißen der Wandung (4) oder Wandungen zur Formung einer Naht gebildet wird.

7. Endverschluß für das Verschließen eines Endes eines Behälterkörperabschnittes, wobei der Endverschluß eine Endwandung (3) mit einer ersten und zweiten Hauptflächen aufweist, dadurch **gekennzeichnet**, daß eine hohle Anformung (2) der Endwandung (3) sich von einem Verbindungsabschnitt (5) zwischen der Endwandung (3) und der hohlen Anformung (2) im wesentlichen senkrecht weg von der ersten Hauptfläche erstreckt, und daß ein Bereich dünneren Materials an dem Verbindungsabschnitt (5) vorgesehen ist, bei dem sich die zweite Hauptfläche der ersten Hauptfläche annähert, und dabei eine Bruchlinie an dem Verbindungsabschnitt erzeugt, und daß Einrichtungen (7, 8) auf der zweiten Hauptfläche der Endwandung zur Erleichterung der Anbringung des Endverschlusses an den Behälterkörperabschnitt vorgesehen sind.

## Revendications

1. Récipient thermoplastique à jeter après usage comprenant une surface interne et une surface externe, ledit récipient étant destiné à des applications monodoses et il a une portion corps (1) et deux parois terminales (3, 4), avec un moyen de fermeture arrachable qui recouvre une sortie dudit récipient, ledit moyen de fermeture constituant un prolongement creux (2) du récipient, lequel prolongement (2) est agencé pour pouvoir être arraché du récipient le long d'une ligne de rupture formée par une région de matière amincie, située sensiblement à l'intersection (5) de la base du prolongement (2) et d'une paroi (3) du récipient, dans lequel, à ladite intersection (5), la surface interne du récipient se rapproche de la surface externe pour former ladite région de matière amincie et pour rendre ainsi la ligne de rupture invisible de l'extérieur, caractérisé en ce que ladite sortie est agencée dans une paroi terminale (3) dudit récipient et en ce que ledit moyen de fermeture arrachable qui recouvre ladite sortie est agencé, par rapport au récipient de telle manière qu'on puisse saisir ledit récipient d'une main et l'ouvrir par une pression exercée par un doigt de la même main.

2. Récipient selon la revendication 1, caractérisé en ce que la portion corps (1) et ledit ensemble combiné prolongement/paroi terminale (2, 3) sont moulés en une seule pièce.

3. Récipient selon la revendication 1, caractérisé en ce que la paroi terminale (4) qui est éloignée dudit ensemble combiné prolongement/paroi terminale (2, 3) est fixée au récipient après que le récipient a été rempli à travers l'ouverture que cette paroi terminale (4) doit fermer.

4. Récipient selon la revendication 1, caractérisé en ce que la portion (1) du récipient est en un cylindre et en ce que les parois terminales (3, 4) partent perpendiculairement de ladite paroi interne du cylindre.

5. Procédé de moulage par injection d'un récipient selon une quelconque des revendications précédentes, utilisant un outil extérieur adapté à la forme désirée de la surface externe du récipient et un outil intérieur correspondant à la forme intérieure du récipient, caractérisé en ce qu'on maintient entre l'outil intérieur et l'outil extérieur un espace libre qui est sensiblement uniforme, sauf dans une région qui correspond à l'intersection du prolongement (2) et de la paroi terminale (3), dans laquelle un épaulement ou chanfrein de l'outil intérieur a pour résultat, après le moulage par injection, la formation d'une ligne de matière amincie qui correspond à la ligne de rupture qui joint le prolongement (2) à la paroi terminale (3).

6. Procédé de moulage par injection d'un récipient selon la revendication 5, caractérisé en ce que la paroi terminale qui est éloignée de l'ensemble combiné prolongement/paroi terminale (2, 3) est formée en resserrant la portion corps (1) dans la région immédiatement adjacente à l'ouverture de remplissage et en soudant la paroi (1) ou les parois pour former un joint.

7. Fermeture d'extrémité appropriée pour fermer une extrémité d'une portion corps d'un récipient, laquelle fermeture d'extrémité comprend une paroi terminale (3) qui présente une première et une deuxième grandes faces, caractérisée en ce qu'un prolongement creux (2) de ladite paroi terminale (3) part sensiblement perpendiculairement d'une intersection (5) de la paroi terminale (3) et du prolongement creux (2), dans le sens qui s'éloigne de ladite première grande face, et en ce qu'une région de matière amincie est prévue à l'intersection (5) où la deuxième grande face se rapproche de la première grande face, en créant ainsi une ligne de rupture à ladite intersection, en ce que des moyens (7, 8) sont prévus sur la deuxième grande face de la paroi terminale pour faciliter la fixation de ladite fermeture d'extrémité sur une portion corps du récipient.
